# EUROPÄISCHE PATENTSCHRIFT

(11) **EP 0 737 905 B1**
(45) Veröffentlichungstag und Bekanntmachung des Hinweises auf die Patenterteilung: **12.05.1999**
(21) Anmeldenummer: 96104785.9
(22) Anmeldetag: 26.03.1996
(51) Int. Cl.: G05D 23/00, G05D 7/06, G05D 23/02, G05D 23/30, G05D 23/20, F16K 31/04, F01P 7/16, F25B 1/10, F25B 41/04, F25B 5/02

(54) **Thermostatventil**
Thermostatvalve
Valve thermostatique

(30) Priorität: 06.04.1995 DE 29505992 U
(43) Veröffentlichungstag der Anmeldung: 16.10.1996
(73) Patentinhaber: Gustav Wahler GmbH u. Co, D-73730 Esslingen (DE)
(72) Erfinder: Wahler, Hans, Dipl.-Ing., 73728 Esslingen (DE)
(74) Vertreter: Kratzsch, Volkhard, Dipl.-Ing.

(56) Entgegenhaltungen:
- EP-A- 0 165 395
- DE-A- 4 042 404
- DE-A- 4 409 547
- GB-A- 2 281 613
- US-A- 5 419 488

## Beschreibung

Die Erfindung bezieht sich auf ein Thermostatventil zur Regelung der Temperatur des Kühlmittels einer Brennkraftmaschine, insbesondere eines Kraftfahrzeugmotors, der im Oberbegriff des Anspruchs 1 genannten Art.

Bei bekannten Thermostatventilen dieser Art (EP-A-0 165 395, DE-A-44 09 547) weist das Kurzschlußventil eine axiale Sitzfläche der Bypaß-Ventildurchflußöffnung am Ventilgehäuse einerseits und eine am Gehäuse des thermostatischen Betätigungselements relativverschiebbar und mittels einer Feder gehaltene Ventilplatte andererseits auf. Beim Ansprechen des Thermostatventils infolge Temperaturerhöhung wird das Gehäuse des Betätigungselements relativ zu einem unverschiebbar abgestützten Kolben translatorisch verschoben. Zusammen mit dem Gehäuse wird dabei auch die Ventilplatte verschoben, bis letztere auf der Sitzfläche der Bypaß-Ventildurchflußöffnung aufsitzt und letztere dadurch geschlossen ist. Das Gehäuse des thermostatischen Betätigungselements dient hierbei als Halteteil für die Ventilplatte, die darauf mittels eines Ringkragens verschieblich geführt ist, dessen Innendurchmesser etwa so groß wie der Außendurchmesser dieses Halteteils ist. Die am Gehäuse abgestützte Feder, die die Ventilplatte beaufschlagt, dient dazu, einen Überhub des Gehäuses des Betätigungselements dann auszugleichen, wenn sich das Gehäuse über die Schließstellung des Kurzschlußventils hinaus noch weiter relativ zum Kolben verschieben sollte.

Der Erfindung liegt die Aufgabe zugrunde, ein Thermostatventil der eingangs genannten Art dahingehend zu verbessern, daß dieses mit den vorhandenen Bauelementen, die im wesentlichen das Kurzschlußventil ausmachen, noch eine weitere Ventilfunktion erfüllen kann, und dies bei einfacher und kostengünstiger Bauweise und Einsatz nur weniger Bauteile.

Die Aufgabe ist bei einem Thermostatventil der eingangs genannten Art gemäß der Erfindung durch die Merkmale im Kennzeichnungsteil des Anspruchs 1 gelöst. Dadurch, daß das Kurzschlußventil mit seinem Ventilglied zusammen mit der zugeordneten Bypaß-Ventildurchflußöffnung zugleich als beaufschlagbares Druckventil ausgebildet ist,
ist dem Thermostatventil somit die weitere Funktion als Druckventil integriert worden, und dies in einfacher und kostengünstiger Weise mit nur wenigen Bauteilen. Die die Ventilplatte federnd beaufschlagende Feder, die ohnehin auch bei bekannten Thermostatventilen eingangs genannter Art vorhanden ist, wirkt in der Funktion als Druckventil als Gegenfeder, die sich der auf die Ventilplatte im Öffnungssinn einwirkenden Kraft entgegenstellt. Diese Kraft, und somit das eine Ende dieser Feder, kann je nach Gegebenheiten entweder am Gehäuse des Betätigungselements abgestützt werden oder statt dessen auch am Gehäuse des Thermostatventils, relativ zu dem das Gehäuse des Betätigungselements verschiebbar ist. Im erstgenannten Fall macht somit die auf die Ventilplatte wirkende Feder die Relativbewegung des Gehäuses des Betätigungselementes mit. Im anderen alternativen Fall ist die Abstützung der Feder unverändert die gleiche, unabhängig von der jeweiligen Relativposition des Gehäuses des Betätigungselements in bezug auf das Gehäuse des Thermostatventils. Beide Abstützmöglichkeiten für die Ventilplatte liegen im Rahmen der Erfindung. Die Elemente des Kurzschlußventils bestehen aus der im Einbauzustand bleibend auf der Sitzfläche der Bypaß-Ventildurchflußöffnung aufsitzenden Ventilplatte mit darin enthaltener, den Bypaß steuernder Ventilöffnung und aus einem diese Ventilöffnung steuernden Ventilglied, das aus einem zugeordneten Gehäuseteil gebildet ist, der am Gehäuse des Betätigungselements vorgesehen ist. Zur Verwirklichung dieses Gehäuseteils z. B. als zylindrische Gehäuseverlängerung, die in die Ventilöffnung der Ventilplatte zum Verschließen des Bypasses eintauchen kann, braucht lediglich z.B. das Gehäuse des Betätigungselements entsprechend länger ausgebildet zu werden. Statt dessen kann natürlich auch zur Bildung des genannten Gehäuseteils ein besonderes Bauteil bereitgestellt werden, welches am Gehäuse des Betätigungselements angebracht wird. Das-Thermostatventil ist einfach, kostengünstig und hat den Vorteil einer geringen Anzahl von Bauteilen, und dies bei insgesamt drei Ventilfunktionen, die im Thermostatventil integriert sind, d.h. der Funktion als Kühlerventil, als Kurzschlußventil und als Druckventil, das bei Überschreiten eines z.B. durch die Kraft der Feder, die die Ventilplatte belastet, vorgegebenen Druckes anspricht und dann den Durchlaßquerschnitt im Bereich der Bypaß-Ventildurchflußöffnung dementsprechend vergrößert. Eine solche Vergrößerung des Durchlaßquerschnittes im Bereich des Bypasses ist z.B. dann wünschenswert, wenn aufgrund plötzlicher Drehzahlsteigerung der Brennkraftmaschine die Kühlmittelpumpe eine größere Fördermenge an Kühlmittel liefert, dem dann durch Ansprechen des Druckventils Rechnung getragen werden kann.

Weitere besondere Erfindungsmerkmale und vorteilhafte Weiterbildungen des Thermostatventils ergeben sich aus den Ansprüchen 2 bis 19.

Weitere Einzelheiten und Vorteile der Erfindung ergeben sich aus der nachfolgenden Beschreibung.

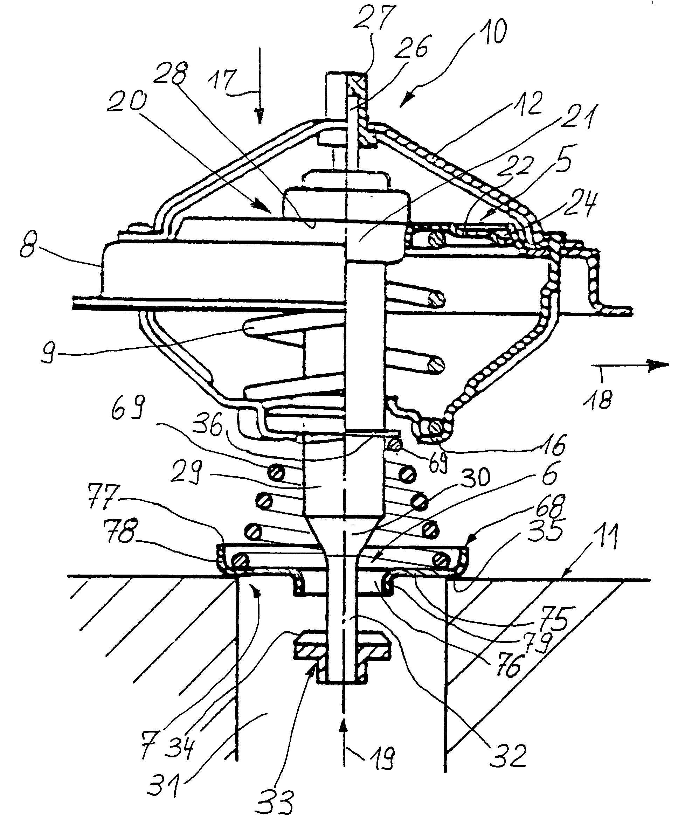

Die Erfindung ist nachfolgend anhand eines in der Zeichnung gezeigten Ausführungsbeispieles näher erläutert. Die Zeichnung zeigt eine schematische Darstellung eines Thermostatventils, links der Längsmittelachse überwiegend in Seitenansicht und rechts der Längsmittelachse überwiegend im vertikalen Schnitt und hierbei in einer Ventilstellung, in der das Kühlerventil geschlossen und das Kurzschlußventil geöffnet ist.

Das in der Zeichnung gezeigte Thermostatventil 10 dient zur Regelung der Temperatur eines Kühlmittels, insbesondere der Kühlflüssigkeit, einer nicht weiter gezeigten Brennkraftmaschine, insbesondere eines Kraftfahrzeugmotors. Es regelt den Kühlmittelfluß von der Brennkraftmaschine durch einen Bypaß und/oder durch einen Wärmeaustauscher, insbesondere einen Kühler, zurück zur Brennkraftmaschine.

Das Thermostatventil 10 ist in der gezeigten Gestaltung einbaufertig und in ein allgemein mit 11 bezeichnetes Ventilgehäuse, von dem der besseren Übersicht wegen in der Zeichnung nur schematisch ein unterer Teil mit einer Bypaß-Ventildurchflußöffnung 31 angedeutet ist, eingebaut. Im übrigen ist das Ventilgehäuse 11 in bekannter Weise und so ausgebildet, daß darin das Thermostatventil 10 aufgenommen wird, wobei die Kühlflüssigkeit z.B. gemäß Pfeil 18 durch einen dortigen, hier nicht gezeigten Kanal abgeführt und je nach Stellung des Thermostatventils 10 entweder über einen nicht gezeigten Kanal gemäß Pfeil 17 von einem nicht gezeigten Wärmeaustauscher, insbesondere Kühler, und/oder durch die Bypaß-Ventildurchflußöffnung 31 und über einen ansonsten nicht weiter gezeigten Kanal gemäß Pfeil 19 und durch einen nicht gezeigten Bypaß von der Brennkraftmaschine zugeführt wird. Es versteht sich, daß entsprechend den Gegebenheiten auch eine andere Führung der Kühlflüssigkeit im Rahmen der Erfindung liegt.

Das Thermostatventil weist innerhalb des Ventilgehäuses 11 ein thermostatisches Betätigungselement 20 auf, dessen Gehäuse 21 zumindest im oberen Teil einen sich bei Erwärmung ausdehnenden Dehnstoff, z.B. Wachs, enthält. In den Dehnstoff im Gehäuse 21 taucht ein dazu koaxialer Kolben 26 ein, der oben aus dem Gehäuse 21 herausgeführt und an einem Widerlager 27 axial abgestützt ist, das hier z.B. an einem oberen Bügel 12 gehalten ist.

Das Thermostatventil 10 vereinigt in sich insgesamt drei Ventile, nämlich ein Kühlerventil 5, ferner ein Kurzschlußventil 6 und zusätzlich ein Druckventil 7. Das Kühlerventil 5 steuert den Ventildurchgang vom Pfeil 17 zum Pfeil 18. Das Kurzschlußventil 6 steuert den Bypaßdurchgang vom Pfeil 19 zum Pfeil 18. Das Druckventil 7 steuert in Pfeilrichtung 19 eine Öffnung der Bypaß-Ventildurchflußöffnung 31. Das Kühlerventil 5 ist hier in üblicher Weise gestaltet. Es weist ein z.B. tellerförmiges Ventilverschlußglied 22 auf dem Gehäuse 21 auf, das eine Ventildurchflußöffnung 24 in Form eines Ventilsitzes verschließt oder je nach Stellung mehr oder weniger freigibt. Das Ventilverschlußglied 22 liegt axial an einem Anschlag 28, z.B. einer Schulter des Gehäuses 21, an und ist mittels einer Feder 9 in Schließrichtung belastet, die einerseits am Ventilverschlußglied 22 und andererseits an einem Widerlager 16, z.B. an einem oder mehreren Bügeln eines Gehäuses 8, abgestützt ist, das die Ventildurchflußöffnung 24 enthält. Das Kühlerventil 5 wird somit bei Erwärmung des Dehnstoffes innerhalb des Gehäuses 21 dadurch geöffnet, daß sich der Dehnstoff ausdehnt und aufgrund des unverschiebbar abgestützten Kolbens 26 sich somit das Gehäuse 21 mitsamt dem Ventilverschlußglied 22 in der Zeichnung nach unten und gegen die Wirkung der Feder 9 verschieben kann. Sinkt die Temperatur ab, so kühlt der Dehnstoff unter Volumenverringerung ab, woraufhin die Feder 9 das Gehäuse 21 mit Ventilverschlußglied 22 in gegensinniger Richtung in Schließstellung bewegen kann, in der das Ventilverschlußglied 22 die Ventildurchflußöffnung 24 gemäß Zeichnung verschließt.

Das Gehäuse 21 ist in der Zeichnung nach unten hin durch einen zylindrischen Gehäuseteil 29 verlängert, der gegen die Pfeilrichtung 19 über das Widerlager 16 hinaus ragt und nach unten vorsteht. An diesen Gehäuseteil 29 schließt sich in axialer Verlängerung dieses ein im Querschnitt betrachtet schmalerer Tragteil 32 an, der in der gezeigten Ventilstellung in die Bypaß-Ventildurchflußöffnung 31 hineinragt und dazu z.B. etwa koaxial verläuft. Zwischen dem Gehäuseteil 29 und dem Tragteil 32 befindet sich ein kegelstumpfförmiges Übergangsteil 30 als Zentrierhilfe für den Gehäuseteil 29.

Auf dem Gehäuse 21 des Betätigungselements 20 ist unverlierbar und gegen die Wirkung einer Feder 69 relativverschiebbar ein Ventilglied 68 gehalten, das der Bypaß-Ventildurchflußöffnung 31 zugeordnet und als Ventilplatte 75 ausgebildet ist. Diese Ventilplatte 75 weist eine vorzugsweise zentrale Durchgangsöffnung 76 auf, die von dem Gehäuseteil 29 des Betätigungselements 20 je nach Ventilposition durchsetzbar ist und zusammen mit dem Gehäuseteil 29 und dem sich anschließenden Tragteil 32 das Kurzschlußventil 6 bildet. In besonderer Gestaltung ist dieses Kurzschlußventil 6 zusammen mit der zugeordneten Bypaß-Ventildurchflußöffnung 31 zugleich als in Pfeilrichtung 19 beaufschlagbares Druckventil 7 ausgebildet. In dieser Funktion als Druckventil 7 ist die Ventilplatte 75 vom Druck in der Bypaß-Ventildurchflußöffnung 31 beaufschlagbar und dann, wenn dieser Druck einen vorgegebenen Wert übersteigt, gegen die Wirkung der Feder 69 und somit in Pfeilrichtung 19 von ihrer zugeordneten Sitzfläche 35 der Bypaß-Ventildurchflußöffnung 31 unter Freigabe letzterer abhebbar.

In der in der Zeichnung gezeigten Funktion als Kurzschlußventil 6 sitzt die Ventilplatte 75 auf der axial abstützenden Sitzfläche 35 der Bypaß-Ventildurchflußöffnung 31 bleibend auf, wobei die Ventilplatte 75 durch die Feder 69 gegen die Sitzfläche 35 angedrückt ist. Die axial abstützende Sitzfläche 35 liegt der Ventilplatte 75 axial gegenüber, wobei sie vorzugsweise von einer axialen Stirnfläche des Ventilgehäuses 11 gebildet sein kann.

Die zentrale Öffnung 76 in der Ventilplatte 75 ist als den Bypaß steuernde Ventilöffnung ausgebildet. Der Gehäuseteil 29 des Betätigungselements 20 ist als diese Öffnung 76 steuerndes Ventilglied ausgebildet, wobei beide gemeinsam das Kurzschlußventil 6 bilden. Betrachtet man die Elemente dieses Kurzschlußventils 6, so ist die Ventilplatte 75 als in bezug auf das Ventilgehäuse 11 ruhende Platte anzusehen, deren Öffnung 76 vom Gehäuseteil 29 auf- oder zugesteuert wird. Der Gehäuseteil 29 des Betätigungselements 20 ist in der Funktion als Kurzschlußventil 6 gegen die Wirkung der Feder 69 über den als Zentrierhilfe wirkenden Übergangsteil 30 axial in die Öffnung 76 der Ventilplatte 75 einschiebbar unter im wesentlichen Verschließen dieser Öffnung 76 und gegensinnig dazu unter der Wirkung der Feder 69 aus dieser Öffnung 76 axial ausschiebbar unter zumindest teilweiser Freigabe dieser Öffnung 76. Es versteht sich, daß der Gehäuseteil 29 und der sich daran anschließende Tragteil 32 in bezug auf das Gehäuse 21 eigenständige Bauteile, die fest damit verbunden sind, sein können. Beim gezeigten Ausführungsbeispiel sind der Gehäuseteil 29 und der Tragteil 32 und der Übergangsteil 30 miteinander einstückig, wobei diese auch mit dem Gehäuse 21 einstückig sind.

Der sich durch die Öffnung 76 in der Ventilplatte 75 hindurcherstreckende Tragteil 32 ist hinsichtlich seiner Querschnittsform und/oder Querschnittsgröße derart bemessen, daß ein genügend großer Durchlaß in der Öffnung 76 der Ventilplatte 75 verbleibt, der bei geöffnetem Kurzschlußventil 6, d.h. in der in der Zeichnung dargestellten Ventilposition, einen genügenden Kühlmitteldurchlaß vom Pfeil 19 in Richtung des Pfeiles 18 ermöglicht. Der Tragteil 32 kann dabei hinsichtlich seiner Gestaltung nahezu beliebig sein, z.B. auch aus einer Schraube oder einem ähnlichen Verankerungselement bestehen, das z.B. von unten her am Gehäuseteil 29 befestigt ist.

Die Öffnung 76 in der Ventilplatte 75 ist hier kreisförmig. In entsprechender Zuordnung ist der Gehäuseteil 29 zylindrisch. Die Öffnung 76 in der Ventilplatte 75 entspricht im Durchmesser zumindest im wesentlichen dem Außendurchmesser des Gehäuseteils 29, so daß dieser dann, wenn er in die Öffnung 76 hineingeschoben ist, letztere zumindest im wesentlichen verschließt. Der Tragteil 32 kann ebenfalls zylindrisch ausgebildet sein. Er weist auf jeden Fall einen kleineren Durchmesser als die Öffnung 76 in der Ventilplatte 75 auf.

Die Feder 69 ist als kegelförmige oder kegelstumpfförmige Schraubenfeder ausgebildet. Dadurch kann das Axialmaß des Thermostatventils 10 möglichst klein gehalten werden. Die Feder 69 ist mit dem in der Zeichnung oberen Ende, vorzugsweise mit dem im Durchmesser kleineren Ende, am Gehäuse 21 bei 36 formschlüssig axial abgestützt. Statt dessen ist auch eine Abstützung am Gehäuse 8, z.B. am Widerlager 16, möglich. Mit dem gegenüberliegenden, in der Zeichnung unteren und vorzugsweise im Durchmesser größeren Ende ist die Feder 69 auf der Oberseite der Ventilplatte 75 abgestützt. Die Ventilplatte hat vorzugsweise am Außenrand eine Führung 77 für das dortige Ende der Feder 69, das mittels der Führung 77 zentriert gehalten ist. Die Führung 77 besteht z.B. aus einem mit der Ventilplatte 75 einstückigen, hochgestellten Ringrand 78.

Der die zentrale Durchgangsöffnung 76 enthaltende Teil der Ventilplatte 75 weist einen etwa zylindrischen Hals 79 auf, der eine axiale Führungsfläche für den in die Öffnung 76 eintauchenden Gehäuseteil 29 trägt. Der Hals 79 dient dabei zugleich zur Zentrierung und Führung des in die Öffnung 76 eintauchenden Gehäuseteils 29. Der Hals 79 weist in die der Feder 69 abgewandte Axialrichtung, d.h. in der Zeichnung nach unten. Er ist vorzugsweise mit der Ventilplatte 75 einstückig.

Am Gehäuse 21 des Betätigungselements 20, und hierbei insbesondere am Tragteil 32, ist ein Widerlager 33 fest angeordnet, das sich auf der axialen Seite der Ventilplatte 75 befindet, die der Feder 69 abgewandt ist. Das Widerlager 33 ist als Anschlag für die Ventilplatte 75 zu deren unverlierbarer Halterung am Gehäuse 21, insbesondere Gehäuseteil 29 mit Tragteil 32, ausgebildet. Diese Funktion des Widerlagers 33 ist dann gegeben, wenn das Thermostatventil 10 einbaufertig zusammengebaut aber noch nicht in das Ventilgehäuse 11 eingebaut ist. In diesem einbaufertigen Zustand verhindert das Widerlager 33, daß die von der Feder 69 beaufschlagte Ventilplatte 75 herabfällt.

Das Widerlager 33 weist auf der dem Hals 79 der Ventilplatte 75 zugekehrten Axialseite Zentriermittel 34 für die Ventilplatte 75 auf. Als Zentriermittel 34 ist beispielsweise ein oberseitiger Kegelstumpfteil geeignet, der in der Zeichnung angedeutet ist und mit seiner Kugelstumpffläche axial am Hals 79 angreifen und zum Teil in letzteren hineingreifen kann. Aufgrund des Schrägverlaufs der Kegelstumpffläche und des Angriffs an der freien Kante des Halses 79 wird somit der Hals und über diesen die Ventilplatte 75 in bezug auf die Längsmittelachse des Gehäuses 21 im einbaufertigen Zustand des Thermostatventils 10 zentriert. Das Widerlager 33 ist beispielsweise aus einer kreisförmigen Platte 37 gebildet, deren Durchmesser zumindest so groß wie derjenige der Öffnung 76 in der Ventilplatte 75 ist, um zu verhindern, daß die Ventilplatte 75 über das Widerlager 33 hinaus axial gegen diePfeilrichtung 19 herabfallen kann, wenn das Thermostatventil 10 sich im einbaufertigen Zustand befindet, jedoch noch nicht in das Ventilgehäuse 11 eingebaut ist. Es versteht sich gleichwohl, daß das Widerlager 33 auch vielfältig anders gestaltet sein kann und hierbei auch die Zentriermittel 34 variieren, wobei auch solche Variationen im Rahmen der Erfindung liegen.

## Patentansprüche

1. Thermostatventil zur Regelung der Temperatur des Kühlmittels einer Brennkraftmaschine, insbesondere eines Kraftfahrzeugmotors, das den Kühlmittelfluß von der Brennkraftmaschine durch einen Bypaß und/oder durch einen Wärmeaustauscher, insbesondere Kühler, zurück zur Brennkraftmaschine regelt, mit einem Kühlerventil (5), einem Kurzschlußventil (6) und einem thermostatischen Betätigungselement (20) für letztere, auf dessen Gehäuse (21) unverlierbar und gegen die Wirkung einer Feder (69) relativ verschiebbar ein Ventilglied (68) des Kurzschlußventils (6) gehalten ist, das einer Bypaß-Ventildurchflußöffnung (31) zugeordnet und als Ventilplatte (75) ausgebildet ist, die eine von einem Gehäuseteil (29) des Betätigungselements (20) durchsetzbare Öffnung (76) aufweist,
**dadurch gekennzeichnet,**
daß das Kurzschlußventil (6) mit seinem Ventilglied (68) zusammen mit der zugeordneten Bypaß-Ventildurchflußöffnung (31) zugleich als beaufschlagbares Druckventil (7) ausgebildet ist, daß die Öffnung (76) in der Ventilplatte (75) als den Bypaß steuernde Ventilöffnung und der Gehäuseteil (29) des Betätigungselements (20) als diese Ventilöffnung steuerndes Ventilglied des Kurzschlußventils (6) ausgebildet sind und daß der Gehäuseteil (29) des Betätigungselements (20) gegen die Wirkung der Feder (69) axial in die Öffnung (76) der Ventilplatte (75) einschiebbar ist unter im wesentlichen Verschließen dieser Öffnung (76) und gegensinnig dazu unter der Wirkung der Feder (69) aus dieser Öffnung (76) axial ausschiebbar ist unter zumindest teilweiser Freigabe dieser Öffnung (76).

2. Thermostatventil nach Anspruch 1,
**dadurch gekennzeichnet,**
daß die Ventilplatte (75) in der Funktion als Druckventil (7) vom Druck in der Bypaß-Ventildurchflußöffnung (31) beaufschlagbar und gegen die Wirkung der Feder (69) von einer zugeordneten Sitzfläche (35) der Bypaß-Ventildurchflußöffnung (31) unter Freigabe dieser abhebbar ist.

3. Thermostatventil nach Anspruch 1 oder 2,
**dadurch gekennzeichnet,**
daß die Ventilplatte (75) in der Funktion als Kurzschlußventil (6) auf der axial abstützenden Sitzfläche (35) der Bypaß-Ventildurchflußöffnung (31) bleibend aufsitzt und durch die Feder (69) angedrückt ist.

4. Thermostatventil nach Anspruch 3,
**dadurch gekennzeichnet,**
daß die axial abstützende Sitzfläche (35) der Ventilplatte (75) axial gegenüberliegt, vorzugsweise von einer axialen Stirnfläche gebildet ist.

5. Thermostatventil nach einem der Ansprüche 1 bis 4,
**dadurch gekennzeichnet,**
daß sich an den Gehäuseteil (29) des Betätigungselements (20), der die Öffnung (76) in der Ventilplatte (75) zu schließen vermag, in axialer Verlängerung vorzugsweise ein etwa kegelstumpfförmiges, als Zentrierhilfe dienendes Übergangsteil (30) und/oder ein Tragteil (32) anschließt, der sich durch die Öffnung (76) in der Ventilplatte (75) hindurch erstreckt.

6. Thermostatventil nach Anspruch 5,
**dadurch gekennzeichnet,**
daß der Tragteil (32) hinsichtlich seiner Querschnittsform und/oder Querschnittsgröße derart bemessen ist, daß ein genügend großer Durchlaß in der Öffnung (76) der Ventilplatte (75) verbleibt.

7. Thermostatventil nach einem der Ansprüche 1 bis 6,
**dadurch gekennzeichnet,**
daß der der Öffnung (76) in der Ventilplatte (75) zugeordnete Gehäuseteil (29) zylindrisch ausgebildet ist.

8. Thermostatventil nach einem der Ansprüche 1 bis 7,
**dadurch gekennzeichnet,**
daß die Öffnung (76) in der Ventilplatte (75) im Durchmesser zumindest im wesentlichen dem Außendurchmesser des Gehäuseteils (29) entspricht.

9. Thermostatventil nach einem der Ansprüche 5 bis 8 ,
**dadurch gekennzeichnet,**
daß der Tragteil (32) zylindrisch ausgebildet ist und einen kleineren Durchmesser als die Öffnung (76) in der Ventilplatte (75) aufweist.

10. Thermostatventil nach einem der Ansprüche 1 bis 9,
**dadurch gekennzeichnet,**
daß die Feder (69) als kegelförmige oder kegelstumpfförmige Schraubenfeder ausgebildet ist, die mit einem Ende, vorzugsweise dem im Durchmesser kleineren Ende, entweder am Gehäuse (21) des Betätigungselements (20) oder am Gehäuse (8) des Thermostatventils abgestützt ist und die mit dem gegenüberliegenden Ende, vorzugsweise mit dem im Durchmesser größeren Ende, auf einer Seite der Ventilplatte (75) abgestützt ist.

11. Thermostatventil nach einem der Ansprüche 1 bis 10
**dadurch gekennzeichnet,**
daß die Ventilplatte (75), vorzugsweise am Außenrand, eine Führung (77) für das Ende der Feder (69) aufweist, das mittels der Führung (77) zentriert gehalten ist.

12. Thermostatventil nach Anspruch 11,
**dadurch gekennzeichnet,**
daß die Führung (77) aus einem hochgestellten Ringrand (78) der Ventilplatte (75) gebildet ist.

13. Thermostatventil nach einem der Ansprüche 1 bis 12,
**dadurch gekennzeichnet,**
daß der die Öffnung (76) enthaltende zentrale Teil der Ventilplatte (75) einen etwa zylindrischen Hals (79) aufweist, der eine axiale Führungsfläche für den in die Öffnung (76) einschiebbaren Gehäuseteil (29) des Betätigungselements (20) trägt.

14. Thermostatventil nach Anspruch 13,
**dadurch gekennzeichnet,**
daß der Hals (79) in die der Feder (69) abgewandte Axialrichtung weist.

15. Thermostatventil nach einem der Ansprüche 1 bis 14,
**dadurch gekennzeichnet,**
daß am Gehäuse (21) des Betätigungselements (20) ein Widerlager (33) fest angeordnet ist, das sich auf der axialen Seite der Ventilplatte (75) befindet, die der Feder (69) abgewandt ist, und das als Anschlag für die Ventilplatte (75) zu deren unverlierbarer Halterung am Gehäuse (21) des Betätigungselements (20) ausgebildet ist.

16. Thermostatventil nach Anspruch 15,
**dadurch gekennzeichnet,**
daß das Widerlager (33) auf der dem Hals (79) der Ventilplatte (75) zugekehrten Axialseite Zentriermittel (34) für die Ventilplatte (75) aufweist.

17. Thermostatventil nach Anspruch 16,
**dadurch gekennzeichnet,**
daß das Widerlager (33) als Zentriermittel (34) einen oberseitigen Kegelstumpfteil aufweist, der mit seiner Kegelstumpffläche axial am Hals (79) angreift und zum Teil in diesen hineingreifen kann.

18. Thermostatventil nach einem der Ansprüche 1 bis 17,
**dadurch gekennzeichnet,**
daß das Widerlager (33) aus einer Platte (37) gebildet ist, deren Durchmesser zumindest so groß wie derjenige der Öffnung (76) in der Ventilplatte (75) ist.

19. Thermostatventil nach einem der Ansprüche 5 bis 18,
**dadurch gekennzeichnet,**
daß das Widerlager (33) am Tragteil (32) angeordnet ist.

## Claims

1. Thermostatic valve for regulating the temperature of the coolant of an internal combustion engine, in particular a motor vehicle engine, which regulates the flow of coolant from the internal combustion engine through a bypass and/or through a heat exchanger, in particular radiator, back to the internal combustion engine, with a radiator valve (5), a short-circuit valve (6) and a thermostatic operating element (20) for the latter, on the housing (21) of which operating element a valve member (68) of the short-circuit valve (6) is held to be undetachable and relatively displaceable against the action of a spring (69), said valve member being allocated to a bypass valve passage (31) and constructed as a valve plate (75), which has an opening (76), through which the housing part (29) of the operating element (20) may pass, characterised in that together with the allocated bypass valve passage (31), the short-circuit valve (6) with its valve member (68) is at the same time constructed as a pressure valve (7), which may be subjected to load, that the opening (76) in the valve plate (75) is constructed as valve opening controlling the bypass, and the housing part (29) of the operating element (20) is constructed as valve member of the short-circuit valve (6) controlling this valve opening, and that the housing part (29) of the operating element (20) may be pushed axially into the opening (76) of the valve plate (75) against the action of the spring (69) by essentially closing this opening (76) and, in the opposite direction to this, may be pushed axially out of this opening (76) under the action of the spring (69) by at least partially releasing this opening (76).

2. Thermostatic valve according to Claim 1, characterised in that in its function as pressure valve (7), the valve plate (75) may be subjected to load from the pressure in the bypass valve passage (31) and, against the action of the spring (69), may be raised from an allocated seat face (35) of the bypass valve passage (31) by releasing this.

3. Thermostatic valve according to Claim 1 or 2, characterised in that in its function as short-circuit valve (6), the valve plate (75) constantly sits on the axially supporting seat face (35) of the bypass valve passage (31) and is pressed by the spring (69).

4. Thermostatic valve according to Claim 3, characterised in that the axially supporting seat face (35) lies opposite the valve plate (75), is preferably formed by an axial front face.

5. Thermostatic valve according to one of Claims 1 to 4, characterised in that an approximately truncated cone-shaped transition part (30) acting as centring aid and/or a support part (32) extending through the opening (76) in the valve plate (75) preferably adjoins the housing part (29) of the operating element (20), which is able to close the opening (76) in the valve plate (75), in axial extension.

6. Thermostatic valve according to Claim 5, characterised in that the support part (32) is dimensioned with respect to its cross-sectional form and/or cross-sectional size in such a way that a sufficiently large passage remains in the opening (76) of the valve plate (75).

7. Thermostatic valve according to one of Claims 1 to 6, characterised in that the housing part (29) allocated to the opening (76) in the valve plate (75) is cylindrical in construction.

8. Thermostatic valve according to one of Claims 1 to 7, characterised in that the opening (76) in the valve plate (75) corresponds in diameter at least essentially to the outside diameter of the housing part (29).

9. Thermostatic valve according to one of Claims 5 to 8, characterised in that the support part (32) is cylindrical in construction and has a smaller diameter than the opening (76) in the valve plate (75).

10. Thermostatic valve according to one of Claims 1 to 9, characterised in that the spring (69) is constructed as a conical or truncated cone-shaped helical spring, which at one end, preferably the end of smaller diameter, is supported either on the housing (21) of the operating element (20) or on the housing (8) of the thermostatic valve, and is supported at the opposite end, preferably the end of larger diameter, on one side of the valve plate (75).

11. Thermostatic valve according to one of Claims 1 to 10, characterised in that preferably on the outer edge, the valve plate (75) has a guide means (77) for the end of the spring (69) held in centred position by means of the guide means (77).

12. Thermostatic valve according to Claim 11, characterised in that the guide means (77) is formed from a raised annular edge (78) of the valve plate (75).

13. Thermostatic valve according to one of Claims 1 to 12, characterised in that the central portion of the valve plate (75) containing the opening (76) has an approximately cylindrical throat (79), which bears an axial guide surface for the housing part (29) of the operating element (20) which may be pushed into the opening (76).

14. Thermostatic valve according to Claim 13, characterised in that the throat (79) points in the axial direction facing away from the spring (69).

15. Thermostatic valve according to one of Claims 1 to 14, characterised in that on the housing (21) of the operating element (20), an abutment (33) is arranged which is located on the axial side of the valve plate (75) facing away from the spring (69), and which is constructed as a stop for the valve plate (75) to hold it undetachably on the housing (21) of the operating element (20).

16. Thermostatic valve according to Claim 15, characterised in that the abutment (33) has centring means (34) for the valve plate (75) on the axial side facing the throat (79) of the valve plate (75).

17. Thermostatic valve according to Claim 16, characterised in that the abutment (33) has a truncated cone part on the upper side as centring means (34) which acts axially on the throat (79) with its truncated cone face and can partially engage into this.

18. Thermostatic valve according to one of Claims 1 to 17, characterised in that the abutment (33) is formed from a plate (37), the diameter of which is at least as large as that of the opening (76) in the valve plate (75).

19. Thermostatic valve according to one of Claims 5 to 18, characterised in that the abutment (33) is arranged on the support part (32).

## Revendications

1. Soupape thermostatique destinée à réguler la température du liquide de refroidissement dans un moteur à combustion interne, en particulier un moteur pour automobile, qui régule le flux du liquide de refroidissement qui sort du moteur à combustion interne, traverse un bypass et/ou un échangeur de chaleur, en particulier un radiateur, et retourne dans le moteur à combustion interne, comprenant une soupape de radiateur (5), une soupape commandée par court-circuit (6) et un élément de commande thermostatique (20) pour cette dernière, contre le corps (21) duquel est maintenu de manière imperdable et de manière à se déplacer à l'encontre de la force exercée par un ressort (69), un organe (68) de la soupape commandée par court-circuit (6), qui est associé à un orifice de passage (31) de la soupape de dérivation et qui est conçue comme une lame de soupape (75), qui est munie d'un orifice (76) à travers lequel peut passer une partie du corps (29) de l'élément de commande (20),
caractérisée en ce que la soupape commandée par court-circuit (6) avec son organe de soupape (68) conjointement avec l'orifice de passage (31) correspondant de la soupape de dérivation est conçue comme une soupape de compression (7) commandée, en ce que l'orifice (76) dans la lame de soupape (75) est conçu comme un orifice de soupape commandant le bypass, et la partie du corps (29) de l'élément de commande (20) est conçue comme un organe de la soupape commandée par court-circuit (6) agissant sur ledit orifice de soupape, et en ce que la partie du corps (29) de l'élément de commande (20) peut s'insérer dans le sens axial, à l'encontre de la force exercée par le ressort (69), dans l'orifice (76) de la lame de soupape (75), sensiblement sous l'effet de la fermeture de cet orifice (76) et, inversement, par la force exercée par le ressort (69), peut sortir dans le sens axial de cet orifice (76) à la suite d'une ouverture au moins partielle de cet orifice (76).

2. Soupape thermostatique selon la revendication 1, caractérisée en ce que, dans la fonction de soupape de compression (7), la lame de soupape (75) peut être sollicitée par la pression qui règne dans l'orifice de passage de la soupape de dérivation (31) et, à l'encontre de la force exercée par le ressort (69), peut être soulevée du siège (35) correspondant de l'orifice de passage de la soupape de dérivation (31) sous l'effet de l'ouverture de ce dernier.

3. Soupape thermostatique selon la revendication 1 ou 2, caractérisée en ce que, dans la fonction de soupape commandée par court-circuit (6), la lame de soupape (75) reste maintenue sur le siège (35), qui fait fonction d'appui axial, de l'orifice de passage de la soupape de dérivation (31) et est bloquée par le ressort (69).

4. Soupape thermostatique selon la revendication 3, caractérisée en ce que le siège (35), qui fait fonction d'appui axial, est situé dans le sens axial en face de la lame de soupape (75) et est formé de préférence par une surface frontale axiale.

5. Soupape thermostatique selon l'une quelconque des revendications 1 à 4, caractérisée en ce que la partie du corps (29) de l'élément de commande (20), qui est destinée à fermer l'orifice (76) dans la lame de soupape (75), est prolongée dans le sens axial de préférence par une partie de transition (30), de forme pratiquement conique utilisée comme auxiliaire de centrage, et/ou une partie de support (32) qui s'étend à travers l'orifice (76) dans la lame de soupape (75).

6. Soupape thermostatique selon la revendication 5, caractérisée en ce que la forme de la section et/ou la dimension de la section de la partie de support (32) sont définies de manière à laisser subsister un passage suffisamment grand dans l'orifice (76) de la lame de soupape (75).

7. Soupape thermostatique selon l'une quelconque des revendications 1 à 6, caractérisée en ce que la partie du corps (29), associée à l'orifice (76) dans la lame de soupape (75), est cylindrique.

8. Soupape thermostatique selon l'une quelconque des revendications 1 à 7, caractérisée en ce que le diamètre de l'orifice (76) dans la lame de soupape (75) correspond au moins sensiblement au diamètre extérieur de la partie du corps (29).

9. Soupape thermostatique selon l'une quelconque des revendications 5 à 8, caractérisée en ce que la partie de support (32) est cylindrique et présente un diamètre inférieur à l'orifice (76) dans la lame de soupape (75).

10. Soupape thermostatique selon l'une quelconque des revendications 1 à 9, caractérisée en ce que le ressort (69) est conçu comme un ressort à boudin en forme de cône ou de cône tronqué, dont une extrémité, de préférence l'extrémité de plus petit diamètre, s'appuie contre le corps (21) de l'élément de commande (20) ou contre la cage (8) de la soupape thermostatique et dont l'autre extrémité, de préférence l'extrémité avec le plus grand diamètre, vient en appui contre un côté de la lame de soupape (75).

11. Soupape thermostatique selon l'une quelconque des revendications 1 à 10, caractérisée en ce que la lame de soupape (75), de préférence sur le bord extérieur, est munie d'un guidage (77) pour l'extrémité du ressort (69) qui reste centrée grâce à ce guidage (77).

12. Soupape thermostatique selon la revendication 11, caractérisée en ce que le guidage (77) est formé par un bord annulaire redressé (78) de la lame de soupape (75).

13. Soupape thermostatique selon l'une quelconque des revendications 1 à 12, caractérisée en ce que la partie centrale de la lame de soupape (75) qui contient l'orifice (76) est munie d'un col (79) pratiquement cylindrique, qui porte une surface de guidage axiale pour la partie du corps (29) de l'élément de commande (20) qui peut s'insérer dans l'orifice (76).

14. Soupape thermostatique selon la revendication 13, caractérisée en ce que le col (79) est orienté dans le sens axial à l'opposé du ressort (69).

15. Soupape thermostatique selon l'une quelconque des revendications 1 à 14, caractérisée en ce qu'une butée (33) est assemblée de manière rigide contre le corps (21) de l'élément de commande (20), laquelle butée est située sur le côté axial de la lame de soupape (75), qui est orienté à l'opposé du ressort (69), et est conçue comme un butoir pour la lame de soupape (75) afin de la maintenir de manière imperdable contre le corps (21) de l'élément de commande (20).

16. Soupape thermostatique selon la revendication 15, caractérisée en ce que la butée (33) est munie sur le côté axial orienté vers le col (79) de la lame de soupape (75) de moyens de centrage (34) pour la lame de soupape (75).

17. Soupape thermostatique selon la revendication 16, caractérisée en ce que la butée (33), en tant que moyen de centrage (34), est munie d'une partie en cône tronqué du côté supérieur, dont la surface en cône tronqué vient en prise dans le sens axial avec le col (79) et peut s'engager en partie dans celui-ci.

18. Soupape thermostatique selon l'une quelconque des revendications 1 à 17, caractérisée en ce que la butée (33) est formée par une plaque (37) dont le diamètre est au moins égal au diamètre de l'orifice (76) dans la lame de soupape (75).

19. Soupape thermostatique selon l'une quelconque des revendications 5 à 18, caractérisée en ce que la butée (33) est disposée contre la partie de support (32).
